Europäisches Patentamt

European Patent Office

Office européen des brevets

(11) Veröffentlichungsnummer: **0 254 115 B1**

(12) **EUROPÄISCHE PATENTSCHRIFT**

(45) Veröffentlichungstag der Patentschrift: 24.07.91

(21) Anmeldenummer: 87109712.7

(22) Anmeldetag: 06.07.87

(51) Int. Cl.⁵: **H04Q 11/04, H04M 3/08**

(54) **Modular strukturiertes ISDN-Kommunikationssystem mit Bildung und Anzeige von Fehlertexten.**

(30) Priorität: 30.09.86 DE 3633193
23.07.86 DE 3624906

(43) Veröffentlichungstag der Anmeldung:
27.01.88 Patentblatt 88/04

(45) Bekanntmachung des Hinweises auf die
Patenterteilung:
24.07.91 Patentblatt 91/30

(84) Benannte Vertragsstaaten:
AT BE CH DE ES FR GB IT LI NL SE

(56) Entgegenhaltungen:
US-A- 3 492 445

TELCOM REPORT, 1985, Sonderheft, Seiten
95-106, Berlin, DE; H. THOMAS et al.:
"Betriebs-Software des ISDN-
Kommunikationssystems HICOM"

BELL LABORATORIES RECORD, Band 57, Nr.
3, März 1979, Seiten 81-84, Murray Hill, US; K.
BRANDT et al.: "Better maintenance for
crossbar tandem"

(73) Patentinhaber: **Siemens Aktiengesellschaft**
**Wittelsbacherplatz 2**
**W-8000 München 2(DE)**

(72) Erfinder: **Bachhuber, Gerhard, Dipl.-Ing.**
**Bognerweg 24**
**W-8031 Wessling(DE)**
Erfinder: **Buhse, Detlef, Ing.**
**Stiftbogen 122**
**W-8000 München 70(DE)**

# Beschreibung

In Kommunikationssystem en werden zwischen Endgeräten Informationen durchgeschaltet bzw. vermittelt, die im einfachsten Fall nur einer Kommunikationsart, zunehmend aber mehreren der Kommunikationsarten Sprache, Bild, Text oder Daten angehören. Insbesondere ISDN-Kommunikationssysteme sind zur Verarbeitung aller Kommunikationsarten geeignet. Es sind bereits ISDN-Kommunikationssysteme bekannt, die das simultane Übertragen unterschiedlicher Kommunikationsarten in einheitlicher digitaler Struktur unter einer Rufnummer an einem Teilnehmeranschluß über ein einziges Adernpaar ermöglichen. Bei einem derartigen ISDN-Kommunikationssystem - ISDN im Büro, Sonderausgabe Telcom-Report 1985, Seiten 95-106 und Siemens-Magazin COM - basiert die gesamte Systemstruktur auf Funktionsmodulen, d. h. daß die Hardware modular aufgebaut und die Software modular strukturiert ist. Wesentliche Module sind ein Durchschaltemodul, das ein digitales Koppelnetz und eine zentrale Steuerungseinrichtung aufweist sowie ein Betriebs- und Datenmodul, das der Steuerung der systemtechnischen Peripherie sowie der Speicherung von Systemdateien dient. Für Module, die wie das Betriebs- und Datenmodul mittels individueller, im allgemeinen durch Mehrprozessoranordnungen realisierte Programmsteuerungen jeweils spezifische Aufgaben erfüllen, hat sich der Begriff "Server" durchgesetzt. Weitere bekannte Server neben dem Betriebs- und Datenserver sind dabei ein Sprachinformationsserver, der den angeschlossenen Teilnehmern die Möglichkeit bietet, ihren Telefonanschluß auf sogenannte Sprach-Postfächer umzuleiten und ein Text- und Faxserver, mit dem unter anderem das Umsetzen einer Nachricht von Teletex auf Telefax in solchen Fällen möglich ist, in denen kein teletexfähiges Endgerät beim Empfänger vorhanden ist. Des weiteren sind Bildschirmtextserver zur Unterstützung der Bedienprozeduren für die Kommunikationsart Bildschirmtext und spezielle Terminalserver bekannt, die simultan die Anforderungen mehrerer multifunktionaler Terminals bearbeiten. Das Durchschaltemodul ist mit allen anderen Programmsteuermodulen über einen Systembus zu einem Gesamtsystem integriert. Die Steuerung sämtlicher Kommunikationsvorgänge wird durch das Protokoll von ISDN-Schnittstellen B + B + D abgewickelt.

Von derartigen Kommunikationssystemen wird im allgemeinen eine ständige Betriebsbereitschaft verlangt. Der Gewährleistung dieser Anforderungen dienen spezielle Hardware- und Softwaremodule, die in ihrer Gesamtheit als Sicherheitstechnik bezeichnet werden, und mit deren Hilfe die Auswirkungen von Störungen begrenzbar sind. Wesentliche der Sicherheitstechnik obliegende Aufgaben sind damit die Störungserkennung, Störungslokalisierung, Störungsbewertung und Störungsmeldung. Bei dem bekannten ISDN-Kommunikationssystem ist die Sicherheitstechnik insgesamt derart strukturiert, daß in jedem Modul ein Teilmodul für die Modulsicherheitstechnik gebildet ist. Diese Teilmodule sind auf die Hardwarestruktur und die Aufgabe des zugehörigen Programmsteuermoduls speziell abgestimmt, in ihrem Grundkonzept aber jeweils gleich. Wegen der zentralen Bedeutung und der vielfältigen Aufgaben des eigentlichen Durchschaltemoduls im Vergleich zu den übrigen Servermodulen unterscheidet sich das Sicherheitstechnik-Teilmodul des Durchschaltemoduls deutlich von den Sicherheitstechnik-Teilmodulen der übrigen Programmsteuermodule. Da zum allgemeinen Bereich der Sicherheitstechnik eines derartigen Kommunikationssystems auch Aufgaben gehören, die den Bereich der Programmsteuermodule überschreiten, ist den einzelnen Sicherheitstechnik-Teilmodulen ein Systemsicherheitstechnik-Teilmodul hierarchisch übergeordnet, das vorzugsweise im Durchschaltemodul angeordnet ist. Als notwendige Voraussetzung dafür, daß Fehlertexte an Fehlerausgabegeräte abgegeben werden können, die Hinweise auf Fehlerart, Fehlerort bzw. Fehlerursache geben, werden von den Sicherheitstechnik-Teilmodulen der einzelnen Programmsteuermodule Fehlerinformationen an dieses Systemsicherheitstechnik-Teilmodul übertragen.

Die der Erfindung zugrundeliegende Aufgabe besteht darin, die unterschiedliche Zahl und Art der Programmsteuermodule, der Fehlerausgabegeräte sowie einen gewünschten unterschiedlichen Umfang von Fehlermeldungen durch ein flexibles Fehleranzeigekonzept zu berücksichtigen. Die Erfindung geht dazu aus von einem modular strukturierten Kommunikationssystem, insbesondere ISDN-Kommunikationssystem, mit einem ein digitales Koppelnetz und eine zentrale Steuerungseinrichtung aufweisenden Durchschaltemodul und einem der Steuerung der systemtechnischen Peripherie sowie der Speicherung von Systemdateien dienenden Betriebs- und Datenmodul sowie weiteren aufgabenorientiert gebildeten Programmsteuermodulen, mit einem alle Programmsteuermodule verbindenden Systembus, mit programmsteuermodulindividuellen Sicherheitstechnik-Teilmodulen und einem diesen hierarchisch übergeordneten Systemsicherheitstechnik-Teilmodul im Durchschaltemodul sowie mit wenigstens einem Fehlerausgabegerät.

Die der Erfindung zugrundeliegende Aufgabe wird im Zusammenhang mit diesem Kommunikationssystem durch die kennzeichnenden Merkmale des Patentanspruches 1 gelöst.

Das durch die Erfindung im Rahmen eines modular strukturierten Kommunikationssystem es geschaffene flexible Fehlersignalisierungskonzept ermöglicht die Anzeige von Fehlern an beliebigen Fehlerausgabegeräten, ohne daß in den Programmsteuermodulen, in denen Fehlersignale erzeugt sind, Informationen über die Zahl, den Ort oder die Art der Anzeigegeräte verfügbar sind. Insbesondere durch die Signalisierungsverteildatei ist dabei die Möglichkeit gegeben, die Reihenfolge der einzelnen Signalisierungsmeldungen gegenüber der Reihenfolge des Eintreffens von Fehlerinformationen am Systemsicherheitstechnik-Teilmodul abzuändern und damit insbesondere unterschiedliche Prioritäten für die Ausgabe von Fehlertexten an den Anzeigegeräten zu setzen. Dies kann auf programmtechnisch einfache Weise durch entsprechende Warteschlangen-Routinen realisiert werden. Eine andere Form der Flexibilität wird insbesondere durch den Einsatz der Signalisierungsformatdatei erreicht, mit der gleichartigen Fehlerinformationen der Systemsicherheitstechnik-Teilmodule bzw. gleichen Signalisierungsmeldungen des Signalisierungs-Teilmoduls unterschiedliche Arten und Inhalte von Fehlertexten, beispielsweise in verschiedenen Sprachen, zugeordnet werden können.

Insgesamt ist mit dem erfindungsgemäßen Kommunikationssystem eine weitestgehende Unabhängigkeit der Fehlersignalisierung von der Anlagenstruktur und dem Anlagenausbauzustand erreicht. Durch die Erfindung ist eine präzise Störungssignalisierung, die Grundlage einer gezielten und schnellen Störungsbeseitigung ist, bei unterschiedlichsten Anlagen möglich. Wesentlicher Grundgedanke des der Erfindung zugrundeliegenden Konzeptes ist eine Bildung von Teilaufgaben für die Fehlersignalisierung und eine zielbewußte Verteilung dieser Teilaufgaben auf die einzelnen Module. Dieses für die Fehlersignalisierung geschaffene modulare Konzept in einem modular strukturierten Kommunikationssystem sieht im Bereich der einzelnen Programmsteuermodule jeweils Möglichkeiten der Erkennung und Analyse von Fehlersignalen aus den betreffenden Programmsteuermodulen vor, woraus Daten über die einzelnen den Fehlersignalen zugrundeliegenden Störungen zu ermitteln und auf Modulebene Fehlerbehandlungsschritte einleitbar sind. Zu dieser generellen Aufgabe der Fehlerbehandlung zählen neben Konfigurierungsmaßnahmen und Wiederherstellungsmaßnahmen (Recovery) auch ein Fehlerreport an das modulübergreifende Systemsicherheitstechnik-Teilmodul in Form entsprechender Fehlerinformationen. Im Systemsicherheitstechnik-Teilmodul werden die aus den modulspezifischen Sicherheitstechnik-Teilmodulen stammenden Fehlerinformationen aufgenommen, verarbeitet und geordnet und dann in Form von Fehlermeldungen an das Signalisierungs-Teilmodul übergeben, das einen indirekten (logischen) Zugriff zur betriebstechnischen Peripherie des Betriebs- und Datenmoduls aufweist. Die Fehlermeldungen des Systemsicherheitstechnik-Teilmoduls können neben den unbedingt notwendigen Angaben über Fehlerort und Fehlerart auch weitere Angaben, wie z. B. Zeitpunkt des Auftretens eines Fehlers, eingeleitete oder empfohlene Recovery-Maßnahmen oder fehlererläuternde Hilfsdaten umfassen, die entweder hardware- oder softwareorientiert sind und die Möglichkeit schaffen, beliebige anwenderspezifizierte Textfolgen zu erzeugen und auszugeben.

Mit Hilfe der in der Signalisierungsverteildatei gespeicherten Daten werden diese Fehlermeldungen vom Signalisierungs-Teilmodul geprüft und für die individuellen Signalisierungsmeldungen aufbereitet. Neben allgemeinen organisatorischen Daten, wie solchen zur Plausibilitätsprüfung der eingetroffenen Fehlermeldungen, und speziellen Ausgabedaten, die die Freigabe oder Verzögerung bzw. Unterdrückung der Ausgabe von Fehlertexten bewirken sowie bestimmten in den Fehlermeldungen enthaltenen Fehlerklassen zugeordneten Signalisierungstexten sind in der Signalisierungsverteildatei mehrere Fehlerfelder für die fehlerindividuellen Daten vorgesehen. In jedem dieser Fehlerfelder sind dabei Daten für eine Meldungsidentifikation und für die Ausgabegerätearten enthalten. Die Signalisierungsformatdatei dient dagegen zur Umsetzung des systemsicherheitstechnik-teilmodulspezifischen Datenformats der Fehlermeldungen in ein von dem Betriebssystem des Betriebs- und Datenmoduls verarbeitbares Datenformat von Signalisierungsmeldungen, die zur Bildung von Fehlertexten in den Ausgabegeräten genutzt werden.

Gemäß einer vorteilhaften Weiterbildung der Erfindung werden diese Signalisierungsmeldungen mittels einer im Betriebs- und Datenmodul vorgesehen, eine Verbindungs- und Datentransportsteuerung implizierenden Modulbetriebstechnik-Steuerung ausgabegeräteindividuellen Logikprozedur-Teilmodulen zur Bildung von an den entsprechenden Ausgabegeräten ausgebbaren Fehlertexten zugeführt. Die Kommunikation des Signalisierungs-Teilmoduls im Betriebs- und Datenmodul mit den ebenfalls im Betriebs- und Datenmodul vorgesehenen Logikprozedur-Teilmodulen erfolgt also nicht direkt, sondern über die zentrale Steuerung der Betriebs- und Datenmodulbetriebstechnik des Betriebs- und Datenmoduls; diese Modulbetriebstechnik-Steuerung dient somit als Netzknoten, der die Aufgaben der Verbindungs- und Datentransportsteuerung für die Signalisierungsmeldungen übernimmt.

In diesem Zusammenhang ist als vorteilhaft anzusehen, daß eine aus der Signalisierungsverteildatei gewonnene Zielinformation als vermittlungstechnischer Bestandteil der Signalisierungsinformation an die Modulbetriebstechnik-Steuerung des Betriebs- und Datenmoduls abgegeben wird. Diese Zielinformation kann beispielsweise als sogenannter Header des die Signalisierungsinformation darstellenden Datenblocks ausgebildet sein.

Das Signalisierungs-Teilmodul des Betriebs- und Datenmoduls führt also keine ausgabegerätespezifische Meldungsaufbereitung von auszugebenden Fehlertexten durch, sondern generiert lediglich Signalisierungsmeldungen, die mit Hilfe der Logikprozedur-Teilmodule in Fehlertexte umgesetzt werden. Diese Aufbereitung erfolgt vorzugsweise derart, daß allen Logikprozedur-Teilmodulen teilmodulspezifische Textprozessoren und ein gemeinsamer Text-Praeprozessor zugeordnet sind. Sämtliche Logikprozedur-Teilmodule sind jeweils auf die Geräteeigenschaften eines bestimmten Ausgabegerätes zugeschnitten und bewirken mit Hilfe von in den Text-Praeprozessor (Man-Machine-Interpreter) eingegebenen Textbausteinen die Umsetzung der Signalisierungsmeldungen in ausgebbare Fehlertexte sowie die Ausgabe dieser Fehlertexte an Ausgabegeräte. Zur Aufbereitung von Fehlertexten können zusätzliche Dateien mit Arbeitsdaten herangezogen werden, die in der Datenbasis der Betriebstechnik des Betriebs- und Datenmoduls verfügbar gehalten werden können. Eine derartige Datei kann als ein den Logikprozedur-Teilmodulen zugeordnetes Teilmodul-Subsystem für die Konvertierung von Textparametern der Signalisierungsmeldungen in Fehlertexte interpretiert werden. Es ist aber auch möglich, daß eine Datenbasis eines Teilmodul-Subsystems auf einem Plattenspeicher realisiert und über eine Datenverwaltungs-Schnittstelle dem Teilmodul-Subsystem zugeordnet ist.

Die Flexibilität der Fehlersignalisierung, insbesondere im Hinblick darauf, daß unterschiedliche Ausgabegerätearten in unterschiedlicher Anzahl und an unterschiedlichen Orten einsetzbar sind, kann dadurch erhöht werden, daß die - vom Signalisierungs-Teilmodul an die Modulbetriebstechnik-Steuerung abgegebene - Zielinformation einem symbolischen Gerät zugeordnet ist und mittels einer Gerätezuordnungsdatei in eine ausgabegerätespezifische Zuteilinformation umgesetzt wird. Die Einbeziehung des geeigneten Logikprozedur-Teilmoduls für die gerätespezifische Bildung und Ausgabe von Fehlertexten wird dann vorteilhafterweise derart erzielt, daß mittels der Zuteilinformation in einer Logikprozeduren-Zuordnungsdatei das der Zielinformation entsprechende Logikprozedur-Teilmodul ermittelt wird.

Das Organisationsprogramm des Signalisierungs-Teilmoduls läuft zustands-anreizgesteuert ab. In diesem Zusammenhang ist vorgesehen, daß die Übermittlung der Fehlermeldungen von dem Systemsicherheitstechnik-Teilmodul an das Signalisierungs-Teilmodul über eine Schnittstelleneinrichtung derselben erfolgt, die mit einem mailboxartig gesteuerten Speicher ausgestattet ist. Solange keine Fehlermeldung an dieser Anreiz-Mailbox ansteht, befindet sich das Signalisierungs-Teilmodul bzw. das Organisationsprogramm derselben in Ruhestellung. Mit dem Eintreffen einer Fehlermeldung an der Anreiz-Mailbox wird der Programmablauf des Signalisierungs-Teilmoduls gestartet.

Die Abgabe von Signalisierungsmeldungen des Signalisierungs-Teilmoduls erfolgt vorzugsweise derart, daß die Übermittlung der Signalisierungsmeldungen von dem Signalisierungs-Teilmodul an die Modulbetriebstechnik-Steuerung über eine Schnittstelleneinrichtung derselben erfolgt, die mit einem mailboxartig gesteuerten Speicher ausgestattet ist. Um Unregelmäßigkeiten im Programmablauf bzw. im Meldungsaustausch zwischen dem Signalisierungs-Teilmodul und der Modulbetriebstechnik-Steuerung erkennen zu können, wird die Übermittlung weiterer Signalisierungsmeldungen von dem Signalisierungs-Teilmodul an die Modulbetriebstechnik-Steuerung von dem Empfang eines Quittungssignals abhängig gemacht, das nach Ausspeicherung einer Signalisierungsinformation aus der Mailbox der Modulbetriebstechnik-Steuerung bzw. nach einer Plausibilitätskontrolle dieser Signalisierungsinformationen erzeugt wird. Bleibt dieses Quittungssignal aus, können weitere Kontrollschritte eingeleitet werden. Diese Überwachung mittels eines Quittungssignals wird vorzugsweise derart realisiert, daß nach Ausspeicherung einer Signalisierungsinformation aus dem Zwischenspeicher der Schnittstelleneinrichtung der Modulbetriebstechnik-Steuerung ein Quittungssignal erzeugt wird, das an eine weitere dem Signalisierungs-Teilmodulzugeordnete, mit einem mailboxartig gesteuerten Speicher ausgestattete Schnittstelleneinrichtung übertragen wird.

Eine weitere vorteilhafte Ausgestaltung der Erfindung besteht darin, dieses flexible Fehleranzeigekonzept durch ein Alarmmeldungskonzept zu ergänzen, mit dem sichergestellt wird, daß die jeweils aktuelle Fehlersituation im Kommunikationssystem und insbesondere die Dringlichkeit von Fehlerbeseitigungsmaßnahmen jederzeit erkennbar und in entsprechende Fehlerbeseitigungsmaßnahmen umsetzbar ist. Dies wird dadurch erreicht, daß wenigstens zwei Ausgabegeräte Vermittlungsfernsprechgeräte mit jeweils einer Alarmanzeigeeinrichtung und einer Alarmtextausgabeeinrichtung darstellen, die unter dem Steuereinfluß eines im Durchschaltemodul angeordneten Alarmmeldungenverwaltungs-Teilmoduls stehen, das einem allen Vermittlungsfernsprechern zugeordneten Alarmprozedur-Teilmodul nachgeordnet ist, und daß ein allen Vermittlungsfernsprechgeräten zugeordneter Alarmspeicher vorgesehen ist, dessen Speicherelemente jeweils ein Speicherfeld für von einer Koordinierungs-Datei des Signalisierungs-Teilmoduls vergebene Alarmprioritätsinformationen aufweisen, die durch entsprechende Berücksichtigung bei der Einspeicherung der Alarmmeldungen mittels einer Alarmspeicherverwaltungs-Steuerung die prioritätsgerechte Reihenfolge der mittels Abfragebefehlen an den Vermittlungsfernsprechgeräten eingeleiteten Alarmmeldungsabfrage aus dem Alarmspeicher festlegen.

Der mit dieser Ausgestaltung erzielbare Vorteil liegt insbesondere darin, daß an üblicherweise ständig besetzten Vermittlungsfernsprechgeräten jeweils - mittels der Alarmanzeigeeinrichtung - das Auftreten von Fehlern angezeigt wird und - mittels der den einzelnen Fehlermeldungen zugeordneten Alarmprioritätsinformationen - eine prioritätsgerechte Abfrage der einzelnen Fehlerinformation an der Alarmtextausgabeeinrichtung möglich ist. Wie für die anderen ausgabegeräteartindividuellen Logikprozedur-Teilmodule wird für die Alarmmeldungen ein Alarmprozedur-Teilmodul vorgesehen, das in funktioneller Sicht ein Zwischenmodul zwischen dem Signalisierungs-Teilmodul und dem Alarmmeldungenverwaltungs-Teilmodul darstellt, das insofern den Vermittlungsfernsprechgeräten hierarchisch übergeordnet ist, als es die Verteilung der Informationen über das Vorliegen von Alarmen an die Alarmanzeigeeinrichtungen der einzelnen Vermittlungsfernsprechgeräte und die Ausgabe der eigentlichen Alarmmeldungen an die Vermittlungsfernsprechgeräte nach an den Vermittlungsfernsprechgeräten eingeleiteten Alarmmeldungsabfragen steuert.

Die weitestgehende Unabhängigkeit der Übermittlung solcher Signalisierungsmeldungen an das Alarmprozedur-Teilmodul von der Übermittlung von Signalisierungsmeldungen an die Logikprozedur-Teilmodule wird bevorzugt dadurch erreicht, daß die Übermittlung der Signalisierungsmeldungen von der Modulbetriebstechnik-Steuerung an das Alarmprozedur-Teilmodul über eine Schnittstelleneinrichtung erfolgt, die mit einem mailboxartig gesteuerten Speicher ausgestattet ist.

Der Alarmspeicher kann innerhalb des modular strukturierten Kommunikationssystems als weitestgehend selbständiges Teilmodul realisiert sein; es ist aber auch möglich, daß der Alarmspeicher einen integralen Bestandteil entweder des Signalisierungs-Teilmoduls oder des Alarmmeldungenverwaltungs-Teilmoduls darstellt. Als im Hinblick auf die Probleme der Aktualisierung (update) des Alarmspeichers bei Routineumschaltungen oder beim informationserhaltenden Neustart der Systembetriebstechnik nach Fehlerbeseitigungsmaßnahmen besonders günstig ist jedoch anzusehen, daß der Alarmspeicher im Alarmprozedur-Teilmodul realisiert ist.

Eine vorteilhafte Weiterbildung sieht vor, daß eine Alarmspeicher-Verwaltungssteuerung vom Belegungszustand des Alarmspeichers und von den Alarmprioritätsinformationen der Alarmmeldungen abhängige Alarmsignale für die Alarmanzeigeeinrichtungen erzeugt. Dies kann beispielsweise in der Form erfolgen, daß die Alarmanzeigeeinrichtungen als Lampen ausgebildet sind, die bei leerem Alarmspeicher dunkel, bei niedriger Priorität der Alarmmeldungen langsam flackernd und bei höherer Priorität der Alarmmeldungen schnell flackernd gesteuert werden. Damit ist für die Bedienungsperson des Vermittlungsfernsprechgerätes jederzeit ein Hinweise für die Notwendigkeit bzw. Dringlichkeit einer Abfrage des Alarmspeichers und daraus abzuleitender notwendige Fehlerbeseitigungsmaßnahmen gegeben. Die Alarmsignale für die Alarmanzeigeeinrichtungen werden vorzugsweise derart aktualisiert, daß jeweils bei Einspeichern einer Alarmmeldung in den Alarmspeicher ein den aktuellen Belegungszustand des Alarmspeichers repräsentierendes Alarmsignal erzeugt wird. Zweckmäßigerweise wird die Art des Alarmsignals - beispielsweise schnell flackernd oder langsam flackernd -von der Alarmmeldung mit der höchsten Priorität abgeleitet; d. h. daß bei Vorliegen mehrerer Alarmmeldungen mit niedriger Priorität und mindestens einer Alarmmeldung mit höherer Priorität das der höheren Priorität zugeordnete Alarmsignal erzeugt wird. Die Alarmsignale können auch zusätzliche bzw. differenzierende Informationen, wie z. B. die Anzahl der momentan gespeicherten Alarmmeldungen oder die Anzahlen der gespeicherten Alarmmeldungen niedriger und höherer Priorität, enthalten. Für derartig differenzierte Alarmsignale wird zweckmäßigerweise als Alarmanzeigeeinrichtung ein Display an dem Vermittlungsfernsprechgerät vorgesehen.

Eine weitere vorteilhafte Ausgestaltung betrifft die Organisation des Alarmspeichers und sieht vor, daß die Speicherelemente des Alarmspeichers jeweils um ein weiteres Speicherfeld zur Aufnahme von Adreßdaten ergänzt sind, die jeweils ein Speichersegment eines Arbeitsspeichers bezeichnen, in dem dem betreffenden Alarm zugeordnete Alarmdaten gespeichert sind. Damit wird es möglich, den größten Teil der für die Speicherung der Textparameter benötigten Speicherkapazität in auch für zusätzliche andere Daten vorgesehene Arbeitsspeicher zu verlegen. Damit werden die Einspeicher- und Ausspeichervorgänge des eigentlichen Alarmspeichers in sehr kurzen Zeiten durchführbar, so daß der Alarmspeicher praktisch jederzeit für solche Vorgänge zur Verfügung steht.

Die prioritätsgerechte Ein- und Ausspeicherung von Alarmmeldungen wird vorzugsweise derart realisiert, daß mittels der Alarmspeicher-Verwaltungssteuerung Eingabeindizes für das Einfügen und Ausgabeindizes für das Ausgeben der Alarmmeldungen erzeugt sind. Diese Indexsteuerung kann beispielsweise derart organisiert sein, daß jeweils ein Eingabeindex die zuletzt eingegebene Alarmmeldung hoher und Alarmmeldung niedriger Priorität bezeichnet und daß der Ausgabeindex die Position der letzten an das Alarmmeldungenverwaltungs-Teilmodul abgegebenen Alarmmeldung kennzeichnet, solange der Alarm sich im Alarmspeicher befindet. Wenn z.B. eine ausgegebene Alarmmeldung geringerer Priorität durch das Einfügen einer Alarmmeldung mit höherer Priorität im Alarmspeicher verschoben wird, erhält der Ausgabeindex den neuen Platzindex, wird also mitgeführt, bis der höchste Indexwert - Zahl der Speicherelemente des Alarmspeichers - erreicht ist.

Es ist auch möglich - z. B. nach Abfragen und Reagieren auf den Inhalt bestimmter Alarmmeldungen - im Alarmspeicher vorhandene und abgefragte Alarmmeldungen vom Vermittlungsfernsprechgerät aus zu löschen. Dies geschieht vorzugsweise derart, daß mittels eines an einem der Vermittlungsfernsprechgeräte erzeugten Löschbefehls das der aktuell an der zugeordneten Alarmtextausgabeeinrichtung ausgegebenen Alarmmeldung entsprechende Speichersegment freigegeben und die Daten der Speicherfelder des zugehörigen Speicherelementes entsprechend korrigiert werden.

Dabei können durch den Löschbefehl unterschiedliche Auswirkungen im Alarmspeicher erzeugt werden. Wird z. B. bei vollem Alarmspeicher der Löschbefehl für eine Alarmmeldung inmitten der Folge von Alarmmeldungen gegeben, so rücken alle Alarmmeldungen der nachfolgenden Platzindizes um eine Position nach. Die Alarmmeldung, der nunmehr der Ausgabeindex zugeordnet ist, wird an das Alarmmeldungenverwaltungs-Teilmodul abgegeben; im Speicherelement mit dem höchsten Platzindex wird jeweils das Status-Speicherfeld beispielsweise mit einer "0" gekennzeichnet.

Liegt nur eine einzige Alarmmeldung im Alarmspeicher an, so wird diese Alarmmeldung gelöscht und eine entsprechende Leerzustands-Meldung zum Alarmmeldungenverwaltungs-Teilmodul ausgegeben. Wird in einer nicht alle Speicherelemente des Alarmspeichers umfassenden Folge von Alarmmeldungen die letzte Alarmmeldung - zuletzt eingespeicherte Alarmmeldung mit höchstem Platzindex - gelöscht, so wird der Ausgabeindex um "1" erniedrigt und die Alarmmeldung dieses Speicherelementes zum Alarmmeldungenverwaltungs-Teilmodul ausgegeben.

Die Erfindung wird im folgenden anhand eines in vier Figuren dargestellten Ausführungsbeispiels erläutert.

Dabei zeigt

Fig. 1     die modulare Struktur eines Kommunikationssystems und die Einbettung der Betriebssicherheitstechnik in diese Struktur,

Fig. 2     die funktionale Zuordnung eines Signalisierungs-Teilmoduls zu den für die Bildung und Anzeige von Fehlertexten an Anzeigegeräten relevanten Modulen und Teilmodulen des Kommunikationssystems,

Fig. 3     die funktionale Struktur des Signalisierungs-Teilmoduls und seine Schnittstellen zu weiteren Teilmodulen des Kommunikationssystems und

Fig. 4     die funktionale Struktur des Alarmprozedur-Teilmoduls und seine Schnittstellen zu weiteren Teilmodulen und Einrichtungen des Kommunikationssystems.

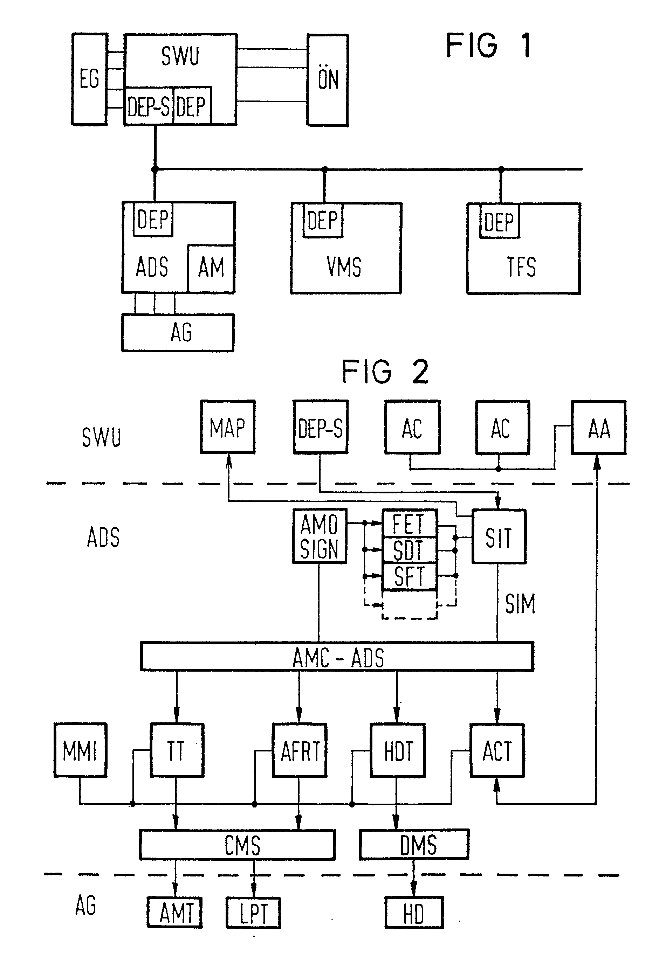

Das in der Fig. 1 schematisch dargestellte Kommunikationssystem weist als wesentliche Funktionsmodule eine Durchschalteeinheit SWU (Switching Unit) mit einem nicht dargestellten digitalen Koppelnetz und einer ebenfalls nicht dargestellten zentralen Mehrprozessorsteuerung sowie ein Betriebs- und Datenmodul ADS (Administration Data Server) auf, die durch zwei weitere Programmsteuermodule VMS (Voice Mail Server), TFS (Text Fax Server) ergänzt sind. Mittels des Kommunikationssystems ist die Verbindung beliebiger Endgeräte EG miteinander und mit öffentlichen Netzen ÖN möglich.

Das Betriebs- und Datenmodul ADS dient sowohl dem Inbetriebsetzen als auch der Inbetriebhaltung sowie der Steuerung des gesamten Kommunikationssystems. Im Betriebs- und Datenmodul ADS werden somit alle betriebstechnischen Daten und Programme gespeichert und insbesondere die Verteilung dieser Programme auf die verschiedenen Systemeinheiten, unter anderem auch auf die übrigen Programmsteuermodule VMS, TFS gesteuert. Die beiden weiteren Programmsteuermodule VMS, TFS ergänzen die eigentliche Vermittlungsfunktion der Durchschalteeinheit SWU um die Zwischenspeicherung der für die einzelnen Endgeräte EG bestimmten Nachrichten.

Die sicherheitstechnische Software des gesamten Kommunikationssystems ist an der modularen Struktur desselben orientiert, d. h. daß alle Programmsteuermodule ADS, VMS, TFS und auch die Durchschalteeinheit SWU jeweils individuelle Sicherheitstechnik-Teilmodule DEP (Dependability) aufweisen. In ihrem Grundkonzept sind die Sicherheitstechnik-Teilmodule DEP gleich; sie sind aber auf die Hardware- und die Softwarestruktur des jeweils zugehörigen Moduls SWU, ADS, VMS, TFS individuell abgestimmt.

Für die die eigentlichen Modulbereiche übergreifenden Teilaspekte der Sicherheitstechnik des gesamten Kommunikationssystems ist in der Durchschalteeinheit SWU ein Systembetriebssicherheitstechnik-Teilmodul DEP-S vorgesehen. Alle Sicherheitstechnik-Teilmodule DEP aller Programmsteuermodule SWU, ADS, VMS, TFS einschließlich der Durchschalteeinheit SWU sind über einen Systembus IEC-B mit dem Systemsicherheitstechnik-Teilmodul DEP-S verbunden. Aus Fehlersignalen in den Systemmodulen SWU, ADS, VMS, TFS werden in den jeweils zugehörigen Sicherheitstechnik-Teilmodulen DEP Fehlerinformationen gebildet und über den Systembus IEC-B an das Systemsicherheitstechnik-Teilmodul DEP-S übertragen. Von dem Systemsicherheitstechnik Teilmodul DEP-S werden aus den Fehlerinformationen gewonnene Fehlermeldungen an das Betriebs- und Datenmodul ADS übertragen und mittels eines Betriebstechnik-Teilmoduls AM (Administration Maintenance) des Betriebs- und Datenmoduls ADS in an dafür vorgesehene Ausgabegeräte AG angepaßte Fehlertexte umgesetzt.

Die in der Fig. 2 im wesentlichen dargestellte funktionale Zuordnung eines Signalisierungs-Teilmoduls SIT (Signalling Task) zur Durchschalteeinheit SWU bzw. zum Betriebs- und Datenmodul ADS und den Ausgabegeräten AG zeigt, daß das Signalisierungs-Teilmodul SIT Fehlermeldungen von dem in der Durchschalteeinheit SWU angeordneten Systemsicherheitstechnik-Teilmodul DEP-S übernimmt. Für die Ausgabe entsprechend generierter Signalisierungsmeldungen greift das Signalisierungs-Teilmodul SIT auf einige Dateien zurück, von denen eine Signalisierungsverteildatei SDT, eine auf das Layout der auszugebenden Fehlertexte bezogene Daten enthaltende Signalisierungsformatdatei SFT und eine auf bestimmte Signalisierungsparameter bezogene Fehlerelementedatei FET dargestellt sind. Die Dateien SDT, SFT und FET werden über Signalisierungs-Betriebsaufträge AMO-SIGN (Administration Orders-Signalling) an die Anlagenstruktur und die Zahl und Art der Ausgabegeräte angepaßt. Für die Ausgabe von Alarmmeldungen bei Auftreten von Teilausfällen oder Totalausfällen wichtiger Systembestandteile steht ein Alarmfeld MAP (Maintenance Alarm Panel) in der Durchschalteeinheit SWU zur Verfügung. Weitere Signalisierungsmeldungen SIM, werden nicht direkt an den Logikprozedur-Teilmodulbereich (Logical Device Units) abgegeben, sondern mittels einer Modulbetriebstechnik-Steuerung AMC-ADS des Betriebs- und Datenmoduls ADS an die Logikprozedur-Teilmodule TT, AFRT, HDT, ACT vermittelt. Als mögliche Ausgabeprozeduren sind im Ausführungsbeispiel eine Terminalprozedur TT (Terminal Task) für die Ausgabe von Fehlertexten an einem Betriebsterminal AMT (Administration Maintenance Terminal) oder einem Kontrollgerät LPT (Line Printer Terminal), eine Fehlerreportprozedur AFRT (Automatic Fault Report Task) zur Ausgabe von Fehlersignalisierungen, insbesondere zur Darstellung von Fehlerstatistiken, an ein nicht dargestelltes zentrales Service-Datenzentrum, eine Speicherprozedur HDT (Hard Disk Task) zur Ausgabe von Fehlertexten an einen Plattenspeicher HD und eine Alarmprozedur ACT zur Ausgabe von Alarmmeldungen an Vermittlungsfernsprechgeräte AC (Attendant Console) dargestellt. Die Ausgabe der in den einzelnen Prozeduren generierten Fehlertexte erfolgt nicht direkt an die Ausgabegeräte AMT, LPT, HD, AC, sondern über eine Kommunikationssteuerung CMS (Communication Management System) bzw. eine Datenverwaltungssteuerung DMS (Data Management System). Die Bildung von geräteangepaßten Fehlertexten mittels der einzelnen Logikprozeduren TT, AFRT, HDT, ACT erfolgt mittels eines allen Prozeduren zugeordneten Praeprozessors MMI (Man Machine Interpreter), mittels dessen auf einfache Weise bestimmte Fehlertexte erzeugt bzw. gewünschte Veränderungen vorgenommen werden können.

Die Ausgabe von Alarmmeldungen an die Vermittlungsfernsprechgeräte AC mittels des Alarmprozedur-Teilmoduls erfolgt nicht direkt, sondern über ein hierarchisch übergeordnetes Alarmmeldungenverwaltungs-Teilmodul AA, das entsprechende Abfragebefehle an den Vermittlungsfernsprechgeräten AC zu Anreizen an das Alarmprozedur-Teilmodul ACT umsetzt und die von diesem abgegebenen Alarmmeldungen an die Vermittlungsfernsprechgeräte AC verteilt. Die Alarmmeldungen sind im Alarmprozedur-Teilmodul ACT nach Prioritäten geordnet, die sich an von der Fehlerelementedatei FET vergebenen und in den Signalisierungsmeldungen SIM enthaltenen Prioritätsdaten orientiert.

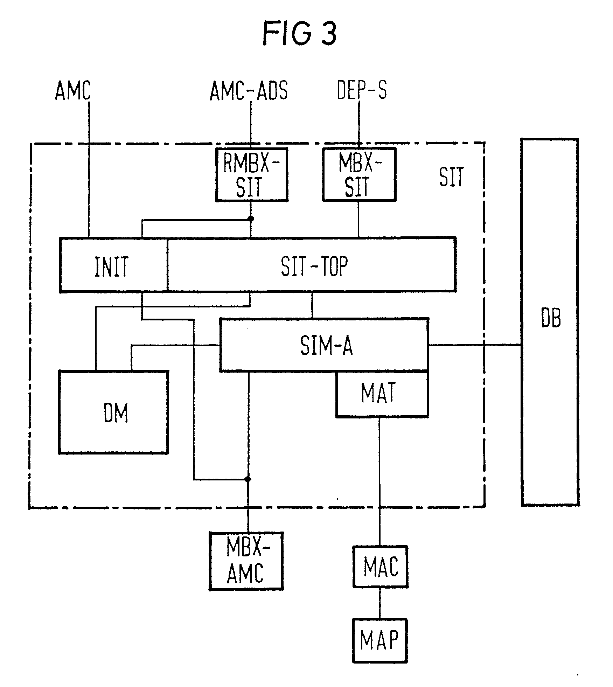

Die Fig. 3 zeigt die Funktionsstruktur des Signalisierungs-Teilmoduls SIT und die Schnittstellen zu anderen Systemkomponenten. Wesentliche Bestandteile des Signalisierungs-Teilmoduls SIT sind eine Initialisierungs-Routine INIT, die unter dem Steuereinfluß der Betriebstechnik-Steuerung AMS-ADS des Betriebs- und Datenmoduls ADS steht sowie ein Organisationsprogramm SIT-TOP, das das Betriebsprogramm des Signalisierungs-Teilmoduls SIT darstellt. Die dafür notwendigen Daten sind in einem Datenmodul DM enthalten. Ein weiterer wesentlicher Bestandteil des Signalisierungs-Teilmoduls SIT ist eine verteil- und formatorientierte Aufbereitungs-Routine SIM-A für die Signalisierungsmeldungen. Diese Aufbereitung dient der Voranpassung der Datenumfangs und des Datenformats der Signalisierungsmeldungen an die nachfolgende Bildung von Fehlertexten (siehe Fig. 2). Mit einer Programmprozedur MAT (Maintenance and Alarm Task) werden Signalisierungsmeldungen erzeugt, die an eine Steuereinrichtung MAC für das Alarmfeld MAP ausgegeben werden.

Das Organisationsprogramm SIT-TOP des Signalisierungs-Teilmoduls SIT läuft zustands-anreizgesteuert in einer Endlosschleife. Die Anreize werden vom Systemsicherheitstechnik-Teilmodul DEP-S in der Durchschalteeinheit an eine Anreiz-Mailbox MBX-SIT abgegeben. Die Abgabe aufbereiteter Signalisierungsmeldungen an die Betriebstechnik-Steuerung AMC-ADS des Betriebs- und Datenmoduls erfolgt über eine Anreiz-Mailbox MBX-AMC derselben. Das Signalisierungs-Teilmodul SIT übernimmt erst nach Eintreffen einer Quittung von der Betriebstechnik-Steuerung AMC-ADS an der Mailbox RMBX-SIT die nächste Fehlermeldung des Systemsicherheitstechnik-Teilmoduls DEP-S aus der Anreiz-Mailbox MBX-SIT. Eine weitere Schnittstelle des Signalisierungs-Teilmoduls SIT besteht zu einer Datenbasis DB des Betriebs- und Datenmoduls.

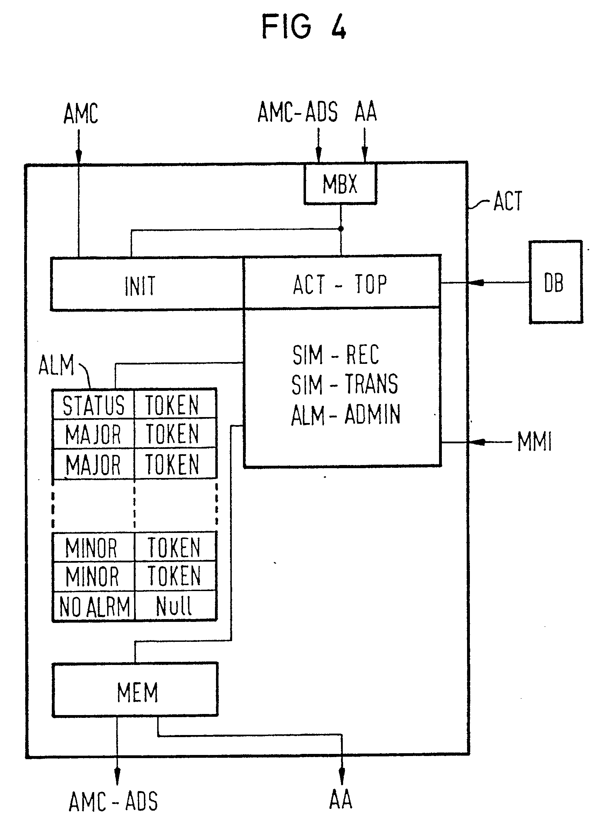

Die in der Fig. 4 gezeigte Funktionsstruktur des Alarmprozedur-Teilmoduls ACT zeigt als wesentliche Komponenten die Schnittstellen zu den anderen Systemmodulen bzw. Teilmodulen, den Alarmspeicher ALM mit einem zugeordneten, die eigentlichen Alarmtexte speichernden Arbeitsspeicher MEM sowie ein Organisationsprogramm ACT-TOP, das das eigentliche Betriebsprogramm des Alarmprozedur-Teilmoduls ACT darstellt. Die für das Betriebsprogramm ACT-TOP notwendigen Daten sind in einem Datenmodul DB enthalten.

Ein wesentlicher Bestandteil des Organisationsprogramms ACT-TOP sind Programmodule SIM-REC für den Empfang von Signalisierungsmeldungen vom Signalisierungs-Teilmodul bzw. von der Modulbetriebstechnik-Steuerung AMC-ADS, die über einen mailboxartig betriebenen Empfangsspeicher MBX zugeführt werden. Ein weiteres Programmodul SIM-TRANS dient der Umsetzung der empfangenen Signalisierungsmeldungen in ausgebbare Alarmtexte, während das Programmteilmodul ALM-ADMIN der eigentlichen Verwaltung des Alarmspeichers ALM bzw. des Arbeitsspeichers MEM dient.

Der Alarmspeicher ALM weist je Speicherelement zwei Speicherfelder auf, von denen das eine - STATUS - jeweils die Priorität - MAJOR, MINOR bzw. NO ALRM (No Alarm) - bezeichnet, während das zweite Speicherfeld - TOKEN - jeweils den Zeiger auf die Adresse darstellt, unter der die zugehörige Alarmmeldung im Arbeitsspeicher MEM abgespeichert ist.

Das der Verwaltung des Alarmspeichers ALM dienende Programm-Teilmodul ALM-ADMIN ist derart organisiert, daß jede empfangene und durch entsprechende Umsetzung gewonnene Alarmmeldung nach ihrer Priorität geordnet wird. Dies erfolgt im einzelnen derart, daß die jeweils zuerst eingetroffene und noch nicht gelöschte Alarmmeldung mit der Priorität MAJOR an erster Stelle im Alarmspeicher steht und die anderen Alarmmeldungen mit gleicher Priorität sich in der Reihenfolge ihres Eintreffens daran anschließen; die Alarmmeldungen mit der geringeren Priorität MINOR folgen nach den Alarmmeldungen mit der höheren Priorität MAJOR, und das Fehlen von Alarmmeldungen auf den Speicherplätzen geringster Priorität wird durch ein entsprechendes STATUS-Symbol, NO ALRM, gekennzeichnet. Die Steuerung des Alarmspeichers ALM kann derart erfolgen, daß die Abspeicherung von Alarmmeldungen mit der Priorität MAJOR generell bevorrechtigt ist, so daß bei Vorliegen einer der Anzahl der Speicherelemente des Alarmspeichers ALM entsprechenden Zahl von Alarmmeldungen mit hoher Priorität MAJOR sämtliche Alarmmeldungen mit geringerer Priorität MINOR aus dem Alarmspeicher ALM verdrängt sind.

## Patentansprüche

1. Modular strukturiertes Kommunikationssystem, insbesondere ISDN-Kommunikationssystem mit einem ein digitales Koppelnetz und eine zentrale Steuerungseinrichtung aufweisenden Durchschaltemodul (SWU) und einem der Steuerung der systemtechnischen Peripherie sowie der Speicherung von Systemdateien dienenden Betriebs- und Datenmodul (ABS) sowie weiteren aufgabenorientiert gebildeten Programmsteuermodulen (VMS, TFS), mit einem alle Programmsteuermodule (SWU, ADS, VMS, TFS) verbindenden Systembus (IEC-B), mit programmsteuermodulindividuellen Sicherheitstechnik-Teilmodulen (DEP) und einem diesen hierarchisch übergeordneten Systemsicherheitstechnik-Teilmodul (DEP-S) im Durchschaltemodul (SWU) sowie mit wenigstens einem Ausgabegerät (AMT, HD, LPT) zur Anzeige von Fehlern,
**dadurch gekennzeichnet,**
daß die Programmsteuermodule (SWU, ADS, VMS, TFS) zur Abgabe von Fehlersignalen ausgebildet sind,
daß die den Programmsteuermodulen (SWU, ADS, VMS, TFS) jeweils zugeordneten Sicherheitstechnik-Teilmodule (DEP) zur Bildung von Fehlerinformationen aus den Fehlersignalen und zur Übertragung dieser Fehlerinformationen an das Systemsicherheitstechnik-Teilmodul (DEP-S) ausgebildet sind,
daß das Systemsicherheitstechnik-Teilmodul (DEP-S) zur Zusammenstellung von Fehlermeldungen aus den Fehlerinformationen gemäß definierter Ordnungskriterien, insbesondere gemäß Fehlerkategorien, und zur Übergabe dieser Fehlermeldungen in einem systemsicherheitstechnik-teilmodulspezifischen Datenformat an ein im Betriebs- und Datenmodul (ADS) vorgesehenes Signalisierungs-Teilmodul (SIT) ausgebildet ist, und
daß dem Signalisierungs-Teilmodul (SIT) eine Signalisierungsverteildatei (SDT) mit Daten zur Meldungsidentifikation, für Fehlerkategorien und zur Konfiguration der Ausgabegeräte (AMT, HD, LPT), und eine Signalisierungsformatdatei (SFT) mit Daten zur Umsetzung des systemsicherheitstechnik-teilmodulspezifischen Datenformats der Fehlermeldungen in ein betriebs- und datenmodulbetriebssystemspezifisches Datenformat von Signalisierungsmeldungen (SIM) zugeordnet ist, wobei die Signalisierungsmeldungen (SIM) zur Bildung von Fehlertexten in den Ausgabegeräten (AMT, HD, LPT) vorgesehen sind.

2. ISDN-Kommunikationssystem nach Anspruch 1,
**dadurch gekennzeichnet,**
daß im Betriebs- und Datenmodul (ADS) eine, eine Verbindungsund Datentransportsteuerung implizierende Modulbetriebstechnik-Steuerung (AMC) zur Zuführung der Signalisierungsmeldungen (SIM) an ausgabegeräteindividuelle Logikprozedur-Teilmodule (LDU) vorgesehen ist, die zur Bildung von an den entsprechenden Anzeigegeräten (AMT, HD, LPT) ausgebbaren Fehlertexten dienen.

3. ISDN-Kommunikationssystem nach Anspruch 2,
**dadurch gekennzeichnet,**
daß den Logikprozedur-Teilmodulen (LDU) mindestens ein Teilmodul-Subsystem (HDT) für die Konvertierung von Textparametern der Signalisierungsmeldungen (SIM) in Fehlertexte zugeordnet ist.

4. ISDN-Kommunikationssystem nach Anspruch 2 oder 3,
**dadurch gekennzeichnet,**
daß allen Logikprozedur-Teilmodulen (LDU) teilmodulspezifische Textprozessoren und ein gemeinsamer Text-Praeprozessor (MMI) zugeordnet ist.

5. ISDN-Kommunikationssystem nach Anspruch 4,
**dadurch gekennzeichnet,**
daß eine Datenbasis des Teilmodul-Subsystems (HDT) auf einem Plattenspeicher (HD) realisiert und über eine Datenverwaltungs-Schnittstelle (DMS) dem Teilmodul-Subsystem (HDT) zugeordnet ist.

6. ISDN-Kommunikationssystem nach einem der Ansprüche 2 bis 5,
**dadurch gekennzeichnet,**
daß eine aus der Signalisierungsverteildatei (SDT) gewonnene Zielinformation als vermittlungstechnischer Bestandteil der Signalisierungsmeldungen (SIM) zur Abgabe an die Modulbetriebstechnik-Steuerung (AMC-ADS) vorgesehen ist.

7. ISDN-Kommunikationssystem nach Anspruch 6,
**dadurch gekennzeichnet,**
daß die Zielinformation einer Ausgabegeräteart (symbolisches Gerät) zugeordnet ist und mittels einer Gerätezuordnungsdatei (SDT) in eine ausgabegerätespezifische Zuteilinformation umsetzbar ist.

8. ISDN-Kommunikationssystem nach Anspruch 7,
**dadurch gekennzeichnet,**
daß mittels der Zuteilinformation in einer Logikprozeduren-Zuordnungsdatei das der Zielinformation entsprechende Logikprozedur-Teilmodul (LDU) ermittelbar ist.

9. ISDN-Kommunikationssystem nach einem der Ansprüche 1 bis 8,
**dadurch gekennzeichnet,**
daß die Übermittlung der Fehlermeldungen von dem Systemsicherheitstechnik-Teilmodul (DEP-S) an das Signalisierungs-Teilmodul (SIT) über eine Schnittstelleneinrichtung (MBX-SIT) derselben erfolgt, die mit einem mailbox-artig gesteuerten Speicher ausgestattet ist.

10. ISDN-Kommunikationssystem nach einem der Ansprüche 2 bis 9,
**dadurch gekennzeichnet,**
daß die Übermittlung der Signalisierungsmeldungen (SIM) von dem Signalisierungs-Teilmodul (SIT) an die Modulbetriebstechnik-Steuerung (AMC-ADS) über eine Schnittstelleneinrichtung (MBX-AMC) derselben erfolgt, die mit einem mailboxartig gesteuerten Speicher ausgestattet ist.

11. ISDN-Kommunikationssystem nach Anspruch 10,
**dadurch gekennzeichnet,**
daß nach Ausspeicherung einer Signalisierungsmeldung (SIM) aus dem Zwischenspeicher der Schnittstelleneinrichtung (MBX-AMC) ein Quittungssignal erzeugbar ist, das zur Übertragung an eine weitere dem Signalisierungs-Teilmodul (SIT) zugeordnete, mit einem mailbox-artig gesteuerten Speicher ausgestattete Schnittstelleneinrichtung (R MBX-SIT) vorgesehen ist.

12. ISDN-Kommunikationssystem nach einem der Ansprüche 1 bis 11,
**dadurch gekennzeichnet,**
daß wenigstens zwei Ausgabegeräte Vermittlungsfernsprechgeräte (AC) mit jeweils einer Alarmanzeigeeinrichtung und einer Alarmtextausgabeeinrichtung darstellen, die unter dem Steuereinfluß eines im Durchschaltemodul (SWU) angeordneten Alarmmeldungenverwaltungs-Teilmoduls (AA) stehen, das einem allen Vermittlungsfernsprechern (AC) zugeordneten Alarmprozedur-Teilmodul (ACT) nachgeordnet ist, und daß ein allen Vermittlungsfernsprechgeräten (AC) zugeordneter Alarmspeicher (ALM) vorgesehen ist, dessen Speicherelemente jeweils ein Speicherfeld (STATUS) für von einer Koordinierungs-Datei (FET) des Signalisierungs-Teilmoduls (SIT) vergebene Alarmprioritätsinformationen aufweisen, die durch entsprechende Berücksichtigung bei der Einspeicherung der Alarmmeldungen mittels einer Alarmspeicherverwaltungs-Steuerung (ALM-ADMIN) die prioritätsgerechte Reihenfolge der mittels Abfragebefehlen an den Vermittlungsfernsprechgeräten (AC) eingeleiteten Alarmmeldungsabfrage aus dem Alarmspeicher (ALM) festlegen.

13. Kommunikationssystem nach Anspruch 12,
**dadurch gekennzeichnet,**
daß die Übermittlung der Signalisierungsmeldungen von der Modulbetriebstechnik-Steuerung (AMC-ADS) an das Alarmprozedur-Teilmodul (ACT) über eine Schnittstelleneinrichtung (MBX) erfolgt, die mit einem mailboxartig gesteuerten Speicher ausgestattet ist.

14. Kommunikationssystem nach Anspruch 13,
**dadurch gekennzeichnet,**
daß der Alarmspeicher (ALM) im Alarmprozedur-Teilmodul (ACT) realisiert ist.

15. Kommunikationssystem nach einem der Ansprüche 12 bis 14,
**dadurch gekennzeichnet,**
daß die Alarmspeicherverwaltungs-Steuerung (ALM-ADMIN) zur Erzeugung von vom Belegungszustand des Alarmspeichers (ALM) und von den Alarmprioritätsinformationen der Alarmmeldungen abhängigen Alarmsignalen für die Alarmanzeigeeinrichtungen ausgebildet ist.

16. Kommunikationssystem nach Anspruch 15,
**dadurch gekennzeichnet,**

daß jeweils bei Einspeichern einer Alarmmeldung in den Alarmspeicher (ALM) ein den aktuellen Belegungszustand des Alarmspeichers (ALM) repräsentierendes Alarmsignal erzeugbar ist.

17. Kommunikationssystem nach einem der Ansprüche 12 bis 16,
**dadurch gekennzeichnet,**
daß die Speicherelemente des Alarmspeicher (ALM) jeweils um ein weiteres Speicherfeld (TOKEN) zur Aufnahme von Adreßdaten ergänzt sind, die jeweils ein Speichersegment eines Arbeitsspeichers (MEM) bezeichnen, in dem dem betreffenden Alarm zugeordnete Alarmdaten gespeichert sind.

18. Kommunikationssystem nach Anspruch 17,
**dadurch gekennzeichnet,**
daß mittels der Alarmspeicherverwaltungs-Steuerung (ALM-ADMIN) Eingabeindizes für das Einfügen und Ausgabeindizes für das Ausgeben der Alarmmeldungen erzeugbar sind.

19. Kommunikationssystem nach Anspruch 17 oder 18,
**dadurch gekennzeichnet,**
daß mittels eines an einem der Vermittlungsfernsprechgeräte erzeugten Löschbefehls das dem aktuell an der zugeordneten Alarmausgabeeinrichtung ausgegebenen Alarm entsprechende Speichersegment freigebbar ist, und die Daten der Speicherfelder (STATUS, TOKEN) des zugehörigen Speicherelementes zur entsprechenden Korrektur vorgesehen sind.

**Claims**

1. Communication system of modular structure, preferably an ISDN communication system, having a switching module (SWU) exhibiting a digital switching network and a central processor and having an operating and data module (ADS) used for controlling the system peripherals and for storing system files, and having other program control modules (VMS, TFS) designed in a task-oriented manner, having a system bus (IEC-B) linking all program control modules (SWU, ADS, VMS, TFS), program-control-module-individual dependability engineering sub-modules (DEP) and a system dependability sub-module (DEP-S) of hierarchically higher level in relation to the former in the switching module (SWU) and having at least one output device (AMT, HD, LPT) for indicating faults, characterised in that the program control modules (SWU, ADS, VMS, TFS) are constructed for outputting fault signals, in that the dependability engineering sub-modules (DEP) in each case allocated to the program control modules (SWU, ADS, VMS, TFS) are constructed for forming fault information items from the fault signals and for transmitting these fault information items to the system dependability engineering sub-module (DEP-S), in that the system dependability engineering sub-module (DEP-S) is constructed for assembling fault messages from the fault information items in accordance with defined criteria of order, preferably in accordance with fault categories, and for transferring these fault messages in a system dependability engineering sub-module-specific data format to a signalling sub-module (SIT) provided in the operating and data module (ADS), and in that the signalling sub-module (SIT) is associated with a signalling distribution file (SDT) with data for message identification, for fault categories and for the configuration of the output devices (AMT, HD, LPT), and a signalling format file (SFT) with data for converting the system dependability engineering sub-module-specific data format of the fault messages into an operating and data module operating system-specific data format of signalling messages (SIM), the signalling messages (SIM) being provided for forming fault texts in the output devices (AMT, HD, LPT).

2. ISDN communication system according to Claim 1, characterised in that in the operating and data module (ADS), a module operation control (AMC), implying a connection and data transport control, for supplying the signalling messages (SIM) to output-device-individual logic procedure sub-modules (LDU) is provided which are used for forming fault texts which can be output to the corresponding display devices (AMT, HD, LPT).

3. ISDN communication system according to Claim 2, characterised in that the logic procedure sub-modules (LDU) are associated with at least one sub-module subsystem (HDT) for converting text parameters of the signalling messages (SIM) into fault texts.

4. ISDN communication system according to Claim 2 or 3, characterised in that all logic procedure sub-modules (LDU) are associated with sub-module-specific text processors and a common text preprocessor (MMI).

5. ISDN communication system according to Claim 4, characterised in that a data base of the sub-module sub-system (HDT) is implemented on a disk store (HD) and is allocated via a data management interface (DMS) to the sub-module sub system (HDT).

6. ISDN communication system according to one of Claims 2 to 5, characterised in that a destination information item obtained from the signalling distribution file (SDT) is provided as switching component of the signalling messages (SIM) for outputting to the module operation control (AMC-ADS).

7. ISDN communication system according to Claim 6, characterised in that the destination information item is allocated to an output device (symbolic device) and can be converted by means of a device allocation file (SDT) into an output-device-specific allocation information item.

8. ISDN communication system according to Claim 7, characterised in that the logic procedure sub-module (LDU) corresponding to the destination information item, can be determined by means of the allocation information item, in a logical procedure allocation file.

9. ISDN communication system according to one of Claims 1 to 8, characterised in that the fault messages are transmitted from the system dependability engineering sub-module (DEP-S) to the signalling sub-module (SIT) via an interface device (MBX-SIT) of the latter, which is equipped with a memory controlled in the manner of a mailbox.

10. ISDN communication system according to one of Claims 2 to 9, characterised in that the signalling messages (SIM) are transmitted from the signalling sub-module (SIT) to the module operation control (AMC-ADS) via an interface device (MBX-AMC) of the latter, which is equipped with a memory controlled in the manner of a mailbox.

11. ISDN communication system according to Claim 10, characterised in that after a signalling message (SIM) has been read out of the buffer store of the interface device (MBX-AMC), an acknowledgement signal can be generated which is provided for transmission to a further interface device (R MBX-SIT) allocated to the signalling sub-module (SIT) and equipped with a memory controlled in the manner of a mailbox.

12. ISDN communication system according to one of Claims 1 to 11, characterised in that at least two output devices represent exchange telephones (AC) having in each case an alarm indicating device and an alarm text output device, which are under the controlling influence of an alarm message management sub-module (AA) arranged in the switching module (SWU), which latter sub-module follows an alarm procedure sub-module (ACT) allocated to all exchange telephones (AC), and in that an alarm memory (ALM) allocated to all exchange telephones (AC) is provided, the memory elements of which in each case exhibit a memory field (STATUS) for alarm priority information items issued by a coordination file (FET) of the signalling sub-module (SIT), which, by means of appropriate consideration in the storing of the alarm message by means of an alarm memory management control (ALM-ADMIN), establish the priority-orientated order of the alarm message interrogation from the alarm memory (ALM), initiated by means of interrogation instructions to the exchange telephones (AC).

13. Communication system according to Claim 12, characterised in that the signalling messages are transmitted from the module operation control (AMC-ADS) to the alarm procedure sub-module (ACT) via an interface device (MBX) which is equipped with a memory controlled in the manner of a mailbox.

14. Communication system according to Claim 13, characterised in that the alarm memory (ALM) is implemented in the alarm procedure sub-module (ACT).

15. Communication system according to one of Claims 12 to 14, characterised in that the alarm memory management control (ALM-ADMIN) is constructed for generating alarm signals, depending on the state of loading of the alarm memory (ALM) and on the alarm priority information items of the alarm messages, for the alarm display devices.

16. Communication system according to Claim 15, characterised in that an alarm signal representing the current state of loading of the alarm memory (ALM) can be generated in each case during the storing of an alarm message in the alarm memory (ALM).

17. Communication system according to one of Claims 12 to 16, characterised in that the memory elements of the alarm memory (ALM) are in each case complemented by a further memory field (TOKEN) for accommodating address data which in each case designate a memory segment of a main memory (MEM) in which alarm data allocated to the relevant alarm are stored.

18. Communication system according to Claim 17, characterised in that input indices for inserting and output indices for outputting the alarm messages can be generated by means of the alarm memory management control (ALM-ADMIN).

19. Communication system according to Claim 17 or 18, characterised in that the memory segment corresponding to the alarm currently output at the associated alarm output device can be released by means of a deletion instruction generated at one of the exchange telephones, and the data of the memory fields (STATUS, TOKEN) of the associated memory element are provided for corresponding correction.

**Revendications**

1. Système de communication à structure modulaire, notamment système de communication ISDN, comportant un module d'interconnexion (SWU) possédant un réseau de couplage numérique et un dispositif central de commande, et un module de service et de transmission de données (ADS), qui sert à réaliser la commande de la périphérie technique du système ainsi que la mémorisation de fichiers du système, et des modules de commande par programmes (VMS, TFS), qui sont formés en fonction des tâches, et comportant un bus système (IEC-B), qui relie tous les modules de commande par programmes (SWU, ADS, VMS, TFS), des modules partiels (DEP) de la technique de sécurité prévus pour chaque module de commande par programme et un module partiel (DEP-S) de la technique de sécurité du système, placé à un rang hiérarchique supérieur, dans le module d'interconnexion (SWU), et au moins un appareil de sortie (AMT, HD, LPT) utilisé pour l'affichage d'erreurs, caractérisé par le fait que les modules de commande par programmes (SWU, ADR, VMS, TFS) sont agencés pour délivrer des signaux d'erreur, que les modules partiels (DEP) de la technique de sécurité respectivement associés aux modules de commande par programmes (SWU,ADS,VMS,TFS) sont agencés pour la formation d'informations d'erreurs à partir des signaux d'erreurs et pour l'information de ces informations d'erreurs au module partiel (DEP-S) de la technique de sécurité du système,

que le module partiel (DEP-S) de la technique de sécurité du système est agencé pour rassembler des signalisations d'erreurs à partir des informations d'erreurs conformément à des critères de rangement définis, notamment en fonction de catégories d'erreurs, et pour retransmettre ces signalisations d'erreurs, dans un format de données spécifique au module partiel de la technique de sécurité du système, à un module partiel de signalisation (SIT) prévu dans le module d'exploitation et de transmission de données (ADS),

qu'au module partiel de signalisation (SIT) est associé un fichier de distribution de signalisations (STT) comportant des données pour l'identification de signalisations, pour des catégories d'erreurs et pour la configuration des appareils de sortie (AMT,HD,LPT), et un fichier de formats de signalisations (SFT) comportant des données pour convertir le format de données, spécifique au module partiel de la technique de sécurité du système, des signalisations d'erreurs en un format de données, spécifique au système d'exploitation des modules d'exploitation et de transmission de données, d'informations de signalisation (SIM), les informations de signalisations (SIM) étant prévues pour former les textes d'erreurs dans les appareils de sortie (AMT,HD,LPT).

2. Système de communication ISDN suivant la revendication 1, caractérisé par le fait que dans le module d'exploitation et de transmission de données (ADS), il est prévu une unité de commande (AMC) de la technique d'exploitation des modules, qui implique une commande des liaisons et une commande du transfert des données, pour l'envoi des informations de signalisation (SIM) à des modules partiels (LDU) de la procédure logique, prévus individuellement pour les appareils de sortie, et qui sont utilisés pour former des textes d'erreurs pouvant être délivrés aux appareils correspondants d'affichage (AMT,HD,

3. Système de communication ISDN suivant la figure 2, caractérisé par le fait qu'au moins un sous-système de module partiel (HDT) est associé au module partiel (LDU) de la procédure logique, pour la conversion de paramètres de textes des informations de signalisation (SIM) en des textes d'erreurs.

4. Système de communication ISDN suivant la revendication 2 ou 3, caractérisé par le fait que des unités de traitement de texte spécifiques aux modules partiels et une unité commune de prétraitement de textes (MMI) sont associées à tous les modules partiels (LDU) de la procédure logique.

5. Système de communication ISDN suivant la revendication 4, caractérisé par le fait qu'une base de données du sous-système de module partiel (HDT) est réalisée sur une mémoire à disques (HD) et est associée, par l'intermédiaire d'une interface de gestion des données (DMS), au sous-système de modules partiels (HDT).

6. Système de communication ISDN suivant l'une des revendications 2 à 5, caractérisé par le fait qu'une information de destination obtenue à partir du fichier de distributions de signalisations (SDT) est prévue en tant que composant technique de commutation des informations de signalisation (SIM) pour son envoi au dispositif de commande (AMC-ADS) de la technique d'exploitation des modules.

7. Système de communication ISDN suivant la revendication 6, caractérisé par le fait que l'information de destination est associée à un type d'appareil de sortie (appareil symbolique) et peut être convertie, au moyen d'un fichier d'associations d'appareils (SDT), en une information d'affectation spécifique à l'appareil de sortie.

8. Système de communication ISDN suivant la revendication 7, caractérisé par le fait que le module partiel (LDU) de la procédure logique, qui correspond à l'information de destination, peut être déterminé au moyen de l'information d'affectation dans un fichier d'association de la procédure logique.

9. Système de communication IDSN suivant l'une des revendications 1 à 8, caractérisé par le fait que la retransmission des signalisations d'erreurs depuis le module partiel (DEP-S) de la technique de sécurité du système au module partiel de signalisation (SIT) s'effectue par l'intermédiaire d'un dispositif d'interface (MBX-SIT), qui est équipé d'une mémoire commandée à la manière d'une boîte à lettres.

10. Système de communication ISDN suivant l'une des revendications 2 à 9, caractérisé par le fait que la retransmission des informations de signalisation (SIM) depuis le module partiel de signalisation (SIT) au dispositif de commande (AMC-ADS) de la technique d'exploitation des modules s'effectue par l'intermédiaire d'un dispositif d'interface (MBX-AMC), qui est équipé d'une mémoire commandée à la manière d'une boîte à lettres.

11. Système de communication ISDN suivant la revendication 10, caractérisé par le fait qu'après mémorisation d'une information de signalisation (SIM), un signal d'accusé de réception est produit à partir de la mémoire intermédiaire du dispositif d'interface (MPX-AMC), ce signal étant destiné à être transmis à un autre dispositif d'interface (R MBX-ST) associé au module partiel de signalisation (SIT) et équipé d'une mémoire commandée à la manière d'une boîte à lettres.

12. Système de communication ISDN suivant l'une des revendications 1 à 11, caractérisé par le fait qu'au moins deux appareils de sortie représentent des appareils téléphoniques de commutation (AC) comportant chacun un dispositif d'indication d'une alarme et un dispositif de délivrance d'un texte d'alarme, qui sont placés sous la commande d'un module partiel (AA) de gestion de signalisations d'alarme, disposé dans le module d'interconnexion (SWU) et qui est installé en aval d'un module partiel (ACT) d'exécution de la procédure d'alarme, associé à tous les appareils téléphoniques de commutation, et qu'il est prévu une mémoire d'alarme (ALM), qui est associée à tous les appareils téléphoniques de commutation (AC) et dont les éléments de mémoire possèdent chacun une zone de mémoire (STATUS) pour des informations de priorité d'alarme, qui sont attribuées par un fichier de coordination (FET) du module partiel de signalisation (SIT) et déterminent, sur la base de leur prise en compte correspondante lors de la mémorisation des signalisations d'alarme, au moyen d'un dispositif de commande (ALM-ADMIN) de gestion des mémoires d'alarme, la séquence à priorité correcte de l'interrogation d'une signalisation d'alarme, déclenchée au moyen d'instructions d'interrogation envoyées aux appareils téléphoniques de commutation (AC), à partir de la mémoire d'alarme (ALM).

13. Système de communication suivant la revendication 12, caractérisé par le fait que la retransmission des informations de signalisation par le dispositif de commande (AMC-ADC) de la technique d'exploitation des modules au module partiels (ACT) d'exécution de la procédure d'alarme est réalisée au moyen d'un dispositif d'interface (MBX), qui est équipé d'une mémoire commandée à la manière d'une boîte à lettres.

14. Système de communication suivant la revendication 13, caractérisé par le fait que la mémoire d'alarme (ALM) est réalisée dans le module partiel (ACT) d'exécution de la procédure d'alarme.

15. Système de communication suivant l'une des revendications 12 à 14, caractérisé par le fait que le dispositif de commande (ALM-ADMIN) de gestion des mémoires d'alarme est agencé de manière à produire des signaux d'alarme, qui dépendent de l'état d'occupation de la mémoire d'alarme (ALM) et des informations de priorité d'alarme des signalisations d'alarme, pour les dispositifs d'indications d'alarme.

16. Système de communication suivant la revendication 15, caractérisé par le fait que respectivement lors de la mémorisation d'une signalisation d'alarme dans la mémoire d'alarme (ALM), un signal d'alarme représentant l'état actuel d'occupation de la mémoire d'alarme (ALM) peut être produit.

17. Système de communication suivant l'une des revendications 12 à 16, caractérisé par le fait que les éléments de mémoire de la mémoire d'alarme (ALM) sont complétés respectivement par une autre zone de mémoire (TOKEN) pour la réception de données d'adresses, qui désigne respectivement un segment d'une mémoire de travail (MM), dans laquelle sont mémorisées des données d'alarme associées à l'alarme considérée.

18. Système de communication suivant la revendication 17, caractérisé par le fait que les indices d'entrée pour l'insertion et des indices de sortie pour la délivrance d'une signalisation d'alarme peuvent être produits au moyen du dispositif de commande (ALM-ADMIN) de gestion des mémoires d'alarme.

19. Système de communication suivant la revendication 17 ou 18, caractérisé par le fait que le segment de mémoire, qui correspond actuellement à l'alarme délivrée au dispositif associé de délivrance d'alarme, peut être libéré à l'aide d'une instruction d'effacement produite dans l'un des appareils téléphoniques de commutation, et que les données des zones de mémoire (STATUS, TOKEN) de l'élément de mémoire associé sont prévues pour réaliser la correction correspondante.

# FIG 1

# FIG 2

# FIG 3

# FIG 4